# FASCICULE DE BREVET EUROPEEN

(11) **EP 4 070 007 B1**
(45) Date de publication et mention de la délivrance du brevet: **04.02.2026**
(21) Numéro de dépôt: 20815820.4
(22) Date de dépôt: 01.12.2020
(51) Int. Cl.: F17C 1/00, F17C 7/00, F17C 13/04, F17C 13/08

(54) **ENSEMBLE DE STOCKAGE ET DE DISTRIBUTION DE FLUIDE SOUS PRESSION POUR VÉHICULE**
ANORDNUNG ZUM AUFBEWAHREN UND AUSGEBEN VON UNTER DRUCK STEHENDEM FLUID FÜR EIN FAHRZEUG
ASSEMBLY FOR STORING AND DISPENSING PRESSURIZED FLUID FOR A VEHICLE

(30) Priorité: 02.12.2019 FR 1913611; 30.09.2020 FR 2009993
(43) Date de publication de la demande: 12.10.2022
(73) Titulaire: PLASTIC OMNIUM NEW ENERGIES FRANCE, 69007 Lyon (FR)
(72) Inventeur: CRIEL, Bjorn, 1130 BRUXELLES (BE); GRAS, Michaël, 1130 BRUXELLES (BE)
(74) Mandataire: LLR
(86) Numéro de dépôt international: PCT/EP2020/084172
(87) Numéro de publication internationale: WO 2021/110707

(56) Documents cités:
- EP-A2- 1 662 196
- WO-A1-00/24608
- WO-A1-2019/015885
- WO-A1-2019/233677
- DE-A1- 102010 045 705
- DE-B3- 102018 215 447
- FR-A1- 2 874 247
- GB-A- 2 541 734
- US-A1- 2003 146 214
- US-A1- 2019 047 404
- US-A1- 2019 047 407

## Description

L'invention concerne le domaine des véhicules, tels que les véhicules automobiles, les camions, les bus, les trains ou encore les bateaux. L'invention concerne plus particulièrement un ensemble de stockage et de distribution de fluide sous pression pour véhicule.

On connaît déjà dans l'état la technique, un réservoir de stockage de fluide sous pression, lequel comporte un embout et un organe fonctionnel disposé sur l'embout, lequel supporte des éléments fonctionnels comme une électrovanne, afin par exemple de distribuer le fluide depuis le réservoir vers un moyen de conversion d'énergie embarqué sur le véhicule, comme une pile à combustible, configuré pour alimenter en énergie des moyens de propulsion du véhicule, comme un moteur électrique. Un tel réservoir est classiquement composé d'une enveloppe interne appelée liner, laquelle possède une fonction d'étanchéité vis-à-vis du fluide contenu dans le réservoir. Le liner comporte une ouverture, laquelle est surmontée par un embout. Le liner et l'embout sont entourés par une structure de renforcement, généralement réalisée par enroulement de bandes de matériau composite à base de polymère thermodurcissable, par exemple à base de résine époxy, chargé de fibres de verre ou de carbone. Cependant, il est parfois nécessaire de disposer de plusieurs réservoirs de stockage de fluide sous pression. En effet, il est parfois souhaité d'augmenter la capacité de stockage embarquée dans le véhicule, alors que l'espace disponible n'est pas compatible avec l'intégration d'un unique réservoir de stockage de grande capacité. Il est alors nécessaire de disposer plusieurs réservoirs de capacité réduite au sein de cet espace disponible, afin d'augmenter la capacité de stockage embarquée dans le véhicule. Dans ce cas, l'encombrement résultant des organes fonctionnels ne permet pas d'optimiser l'espace disponible et le poids de l'ensemble de stockage et de distribution ainsi réalisé est important, du fait que les organes fonctionnels de chaque réservoir représentent un poids important. Des exemples de dispositifs selon l'antérieur sont divulgués dans les documents EP 1 662 196, US 2019/047407, GB 2 541 734, WO 2019/015885, FR 2 874 247, WO 00/24608, US 2019/047404, US 2003/146214, DE 10 2018 215447.

L'invention a notamment pour but de disposer d'un ensemble de stockage et de distribution dont l'encombrement spatial est optimisé et dont le poids est réduit.

A cet effet l'invention a pour objet un ensemble de stockage et de distribution de fluide sous pression pour véhicule, de préférence pour véhicule automobile, tel que défini par la revendication 1.

Ainsi, un ensemble de stockage et de distribution est fourni, lequel possède un encombrement spatial optimisé et un poids réduit. En effet, du fait de la pluralité de réservoirs, l'espace disponible pour l'ensemble de stockage et de distribution peut être rempli au maximum, sans que le poids de l'ensemble de stockage et de distribution ne soit trop important, du fait que l'ensemble comporte une seule électrovanne. Il n'est ainsi pas nécessaire de prévoir une électrovanne pour chaque réservoir, ce qui génère un gain de poids et d'encombrement considérable, du fait qu'une électrovanne est un élément particulièrement encombrant.

Suivant d'autres caractéristiques optionnelles de l'ensemble de stockage et de distribution, prises seules ou en combinaison :
- le premier embout de chaque réservoir comprend en outre au moins un élément fonctionnel, lequel est disposé directement dans le premier embout. Ainsi, on évite de disposer un organe fonctionnel supplémentaire sur l'embout, lequel organe supplémentaire générerait un encombrement et un poids supplémentaire.
- le ou les éléments fonctionnels sont choisis parmi une soupape de sécurité contre la surpression, de préférence à déclenchement thermique, une soupape formant limiteur de débit, une soupape anti-retour, une vanne d'arrêt manuelle, un injecteur, un filtre, un capteur de température, un capteur de pression. De préférence, le premier embout de chaque réservoir comprend tous ces éléments fonctionnels.

Par limiteur de débit, il faut comprendre une soupape uniquement mécanique qui se ferme automatiquement ou qui limite le débit de sortie depuis l'amont du conduit de passage dans lequel elle est disposée, lorsque la pression du fluide en aval est inférieure d'une valeur prédéterminée à la pression du fluide en amont. Ici, l'amont est le conduit de passage menant au réservoir, et l'aval est le conduit de passage de fluide menant au conduit collecteur d'exploitation.
- le premier embout de chaque réservoir comprend des moyens de fermeture du conduit de passage, lesquels sont uniquement mécaniques et sont disposés directement dans le premier embout. Ainsi, chaque réservoir peut être fermé indépendamment des autres, notamment lorsqu'il existe un besoin de tester l'étanchéité d'un réservoir, par exemple en cas de panne ou de réparation. En outre, l'ensemble de stockage et de distribution peut ainsi continuer à être utilisé, même dans le cas où un réservoir est défectueux. Il suffit alors de fermer le conduit de passage de ce réservoir grâce aux moyens de fermeture.
- les réservoirs s'étendent longitudinalement et sont disposés parallèlement les uns aux autres de telle sorte que le conduit collecteur d'exploitation s'étend sensiblement dans un plan. Ainsi, l'encombrement est optimisé, notamment lorsque l'espace disponible est sensiblement prismatique.
- les réservoirs sont en outre alignés de telle sorte que le conduit collecteur d'exploitation est sensiblement rectiligne. Ainsi, l'encombrement est davantage optimisé, notamment lorsque l'espace disponible est relativement plat.
- le premier embout de chaque réservoir est doté d'un premier conduit d'évacuation de fluide configuré pour l'évacuation de fluide vers l'atmosphère, l'ensemble de stockage et de distribution comprenant en outre un premier conduit collecteur d'évacuation, lequel comporte une première ouverture d'évacuation de fluide vers l'atmosphère et une première pluralité d'orifices, chaque orifice étant configuré pour être en communication fluidique avec un premier embout via son premier conduit d'évacuation de fluide. Ainsi, une seule sortie vers l'atmosphère est nécessaire pour l'ensemble de stockage et de distribution, ce qui simplifie la conception générale du véhicule.
- le premier conduit d'évacuation est, en fonctionnement normal, fermé par une première soupape de sécurité contre la surpression. Ainsi, le contenu entier du réservoir n'est pas évacué rapidement vers l'atmosphère tant qu'il n'y a pas de surpression du fluide à l'intérieur du réservoir, due à un incendie par exemple.
- la première soupape de sécurité contre la surpression est agencée au moins en partie dans le premier conduit d'évacuation. Ainsi, en cas d'évacuation rapide du fluide vers l'atmosphère, le chemin d'évacuation est le plus court possible.
- la première soupape de sécurité contre la surpression est agencée au moins en partie dans le premier conduit collecteur d'évacuation. Ainsi, le nombre de premières soupapes de sécurité peut être inférieur au nombre de réservoirs.
- selon l'invention, donc de manière non-optionnelle, chaque réservoir comprend un second embout doté d'un second conduit d'évacuation de fluide configuré pour l'évacuation de fluide vers l'atmosphère, l'ensemble de stockage et de distribution comprenant en outre un second conduit collecteur d'évacuation, lequel comporte une seconde ouverture d'évacuation de fluide vers l'atmosphère et une seconde pluralité d'orifices, chaque orifice étant configuré pour être en communication fluidique avec un second embout via son second conduit d'évacuation de fluide. Ainsi, une seule sortie vers l'atmosphère est nécessaire pour l'ensemble de stockage et de distribution, ce qui simplifie la conception générale du véhicule.
- selon l'invention, donc de manière non-optionnelle, le second conduit d'évacuation est, en fonctionnement normal, fermé par une seconde soupape de sécurité contre la surpression. Ainsi, le contenu entier du réservoir n'est pas évacué rapidement vers l'atmosphère tant qu'il n'y a pas de surpression du fluide à l'intérieur du réservoir, due à un incendie par exemple.
- la seconde soupape de sécurité contre la surpression est agencée au moins en partie dans le second conduit d'évacuation. Ainsi, en cas d'évacuation rapide du fluide vers l'atmosphère, le chemin d'évacuation est le plus court possible.
- la seconde soupape de sécurité contre la surpression est agencée au moins en partie dans le second conduit collecteur d'évacuation. Ainsi, le nombre de secondes soupapes de sécurité peut être inférieur au nombre de réservoirs.
- le premier embout de chaque réservoir et le second embout de chaque réservoir sont dotés d'un conduit d'évacuation de fluide configuré pour l'évacuation de fluide vers l'atmosphère, l'ensemble de stockage et de distribution comprenant en outre un conduit collecteur d'évacuation, lequel comporte une ouverture d'évacuation de fluide vers l'atmosphère et une pluralité d'orifices, chaque orifice étant configuré pour être en communication fluidique avec un premier embout ou un second embout via son conduit d'évacuation de fluide. Ainsi, une seule sortie vers l'atmosphère est nécessaire pour l'ensemble de stockage et de distribution, ce qui simplifie la conception générale du véhicule.
- les réservoirs sont attachés à une structure porteuse dont la fonction principale est de solidariser les réservoirs entre eux. Ainsi, les réservoirs sont solidarisés entre eux au moyen de la structure porteuse.

Avantageusement, la structure porteuse comprend une pièce longitudinale métallique, par exemple une pièce longitudinale en acier inoxydable issue d'une filière d'extrusion ou d'un moule de fonderie.
- le conduit collecteur d'exploitation est agencé dans une partie de la structure porteuse. Ainsi, une autre fonction de la structure porteuse est d'alimenter et/ou de distribuer du fluide.
- le second conduit collecteur d'évacuation est agencé dans une partie de la structure porteuse. Ainsi, une autre fonction de la structure porteuse est d'évacuer le fluide vers l'atmosphère en cas de surpression.
- la structure porteuse comprend des moyens de fixation configurés pour fixer l'ensemble de stockage et de distribution au véhicule. Ainsi, la fixation de l'ensemble de stockage et de distribution au véhicule est simplifiée.
- les réservoirs sont supportés uniquement par le conduit collecteur d'exploitation et par le second conduit collecteur d'évacuation. Ainsi, la fixation de l'ensemble de stockage et de distribution est simplifiée, du fait qu'il n'est pas nécessaire de fixer chaque réservoir au véhicule.
- le conduit collecteur d'exploitation et le second conduit collecteur d'évacuation sont reliés entre eux au moyen d'au moins un tirant, de préférence, métallique. Ainsi, l'ensemble de stockage et de distribution est rigidifié.
- les réservoirs sont vissés par le premier embout au conduit collecteur d'exploitation et par le second embout au second conduit collecteur d'évacuation. Ainsi, les réservoirs sont fixés de manière simple au conduit collecteur d'exploitation et au second conduit collecteur d'évacuation.
- les réservoirs sont fixés par encliquetage, de préférence par raccord rapide, par exemple un raccord de type baïonnette, par le premier embout au conduit collecteur d'exploitation et par le second embout au second conduit collecteur d'évacuation. Ainsi, les réservoirs sont fixés de manière simple au conduit collecteur d'exploitation et au second conduit collecteur d'évacuation.
- les réservoirs sont fixés via des moyens de serrage par le premier embout au conduit collecteur d'exploitation et par le second embout au second conduit collecteur d'évacuation. Les moyens de serrage comprennent par exemple une bague disposée sur chacun des premier et second embouts ou sur le conduit collecteur d'exploitation, et d'un anneau disposé sur l'autre élément parmi le conduit collecteur d'exploitation et chacun des premier et second embouts, la liaison entre l'anneau et la bague réalisant un serrage entre chacun des premier et second embouts et le conduit collecteur d'exploitation. Ainsi, les réservoirs sont fixés de manière simple au conduit collecteur d'exploitation et au second conduit collecteur d'évacuation.
- les réservoirs sont identiques. Ainsi, une conception modulaire est possible, dans laquelle seul le nombre de réservoirs est une variable pour un espace disponible donnée pour un ensemble de stockage et de distribution.
- les réservoirs ont une pression de stockage admissible supérieure à 350 bar, de préférence supérieure à 700 bar. Ainsi, une quantité importante de fluide peut être stockée dans les réservoirs, du fait de la pression admissible importante de ceux-ci.
- le fluide est uniquement à l'état gazeux dans les réservoirs de fluide sous pression, et est de préférence de l'hydrogène. Ainsi, le fait de disposer d'un fluide uniquement à l'état gazeux évite le phénomène de ballottement dû aux accélérations subies par le véhicule, lorsque le fluide se trouve à l'état au moins partiellement liquide dans les réservoirs.
- l'ensemble de stockage et de distribution est constitué par l'assemblage de plusieurs sous-ensembles de stockage et de distribution. Ainsi, l'ensemble de stockage et de distribution est modulable.
- l'ensemble de stockage et de distribution est doté d'une protection antichoc. Ainsi, l'ensemble de stockage et de distribution est protégé contre la déformation et la rupture en cas de choc.

L'invention a également pour objet un véhicule, de préférence un véhicule automobile, comprenant :
- un ensemble de stockage et de distribution du type susmentionné,
- un moyen de conversion d'énergie configuré pour alimenter en énergie des moyens de propulsion du véhicule, lequel est fluidiquement relié à l'ouverture du conduit collecteur d'exploitation de telle sorte qu'il peut être alimenté en fluide,
- un moyen de remplissage de fluide, lequel est fluidiquement relié à l'ouverture du conduit collecteur d'exploitation, et
- un moyen de commande de l'électrovanne, lequel pilote l'électrovanne de telle sorte que celle-ci ferme par défaut l'ouverture du conduit collecteur d'exploitation, et ouvre le conduit collecteur d'exploitation lors d'une phase de remplissage et/ou lors d'une phase de fonctionnement du véhicule.

Par « phase de fonctionnement », il faut notamment comprendre une phase au cours de laquelle le moyen de conversion d'énergie est en marche, par exemple lors du démarrage du véhicule.

Ci-dessus, l'expression « par défaut » signifie notamment que l'électrovanne ferme l'ouverture du conduit collecteur d'exploitation lorsque qu'elle n'est pas alimentée électriquement, ce qui est par exemple le cas lorsque le véhicule n'est pas en marche.

Suivant une autre caractéristique optionnelle du véhicule selon l'invention, l'ensemble de stockage et de distribution est logé dans un logement du véhicule configuré pour loger de manière sélectivement amovible l'un entre l'ensemble de stockage et de distribution et un bloc-batterie. Ainsi, le véhicule peut être propulsé, au choix, par de l'hydrogène gazeux ou des batteries, sans nécessiter de modifier le véhicule.

### Brève description des figures

L'invention sera mieux comprise à la lecture de la description qui va suivre donnée uniquement à titre d'exemple et faite en se référant aux dessins annexés dans lesquels :
- la figure 1 est une vue schématique en perspective d'un ensemble de stockage et de distribution selon un mode de réalisation de l'invention ;
- la figure 2 est une vue schématique en coupe d'un détail d'un ensemble de stockage et de distribution, à savoir d'un réservoir doté d'une première variante de premier embout
- la figure 3 est une vue schématique en coupe d'un détail d'un ensemble de stockage et de distribution, à savoir d'un réservoir doté d'une seconde variante de premier embout ;
- la figure 4 est une vue schématique en coupe d'un détail d'un ensemble de stockage et de distribution, à savoir d'un réservoir doté d'un second embout ;
- la figure 5 est une vue schématique en perspective d'un détail d'un ensemble de stockage et de distribution illustré sur la figure 1 ;
- la figure 6 est une vue schématique en perspective d'un détail d'un ensemble de stockage et de distribution illustré sur la figure 1 ;
- la figure 7 est une vue schématique d'un ensemble de stockage et de distribution comprenant plusieurs sous-ensembles de stockage et de distribution ;
- la figure 8 est une vue schématique d'un ensemble de stockage et de distribution doté d'une protection antichoc.

### Description détaillée

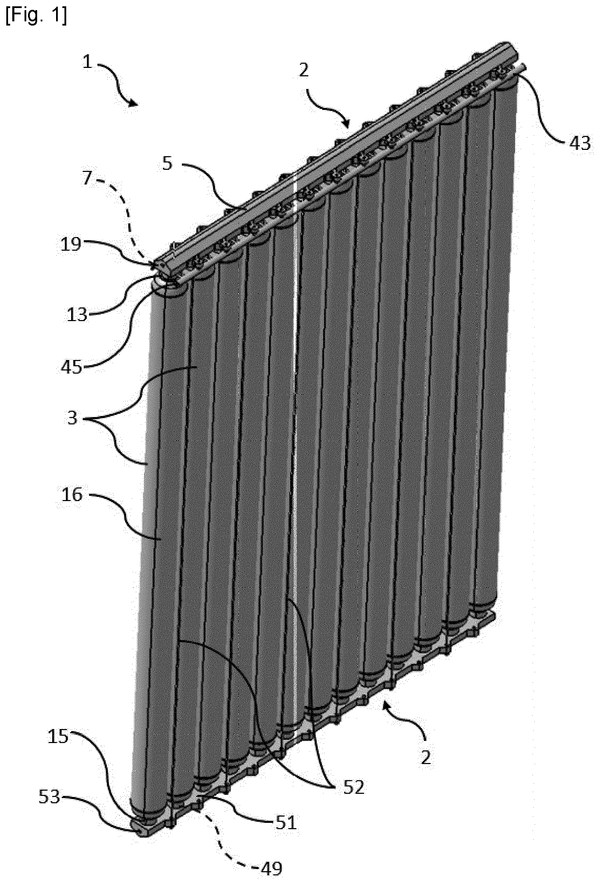

On a représenté sur la figure 1 un ensemble de stockage et de distribution 1 de fluide sous pression selon un mode de réalisation de l'invention. Le fluide est par exemple de l'hydrogène gazeux.

L'ensemble de stockage et de distribution 1 comprend une pluralité de réservoirs 3 de fluide sous pression solidarisés entre eux par une structure porteuse 2, un conduit collecteur d'exploitation 5 et une électrovanne 7. Dans l'exemple illustré sur la figure 1, les réservoirs 3 sont identiques et le conduit collecteur d'exploitation 5 est agencé dans une partie de la structure porteuse 2.

Comme illustré sur les figures, chaque réservoir 3 est sensiblement cylindrique et est composé d'une enveloppe interne également appelée liner 9. Le liner 9 est par exemple réalisé en matériau polymère, et comporte au moins une ouverture sous forme de col. Dans l'exemple illustré sur la figure 1, le liner 9 comprend une première ouverture sous forme de col 11 à l'une de ses extrémités, le col 11 étant surmonté par un premier embout 13. Le liner 9 comprend également une seconde ouverture sous forme de col 12 à l'autre de ses extrémités, le col 12 étant surmonté par un second embout 15. Le premier embout 13 et le second embout 15 sont par exemple métalliques, de préférence en aluminium. Le liner 9, le premier embout 13 et le second embout 15 sont entourés par une structure de renforcement 16, par exemple réalisée par enroulement de bandes de matériau composite à base de polymère chargé de fibres de verre ou de carbone.

Dans l'exemple illustré sur la figure 1, les réservoirs 3 s'étendent longitudinalement, sont disposés parallèlement les uns aux autres et sont en outre alignés. Les réservoirs 3 possèdent une pression de stockage admissible supérieure à 350 bar, de préférence supérieure à 700 bar.

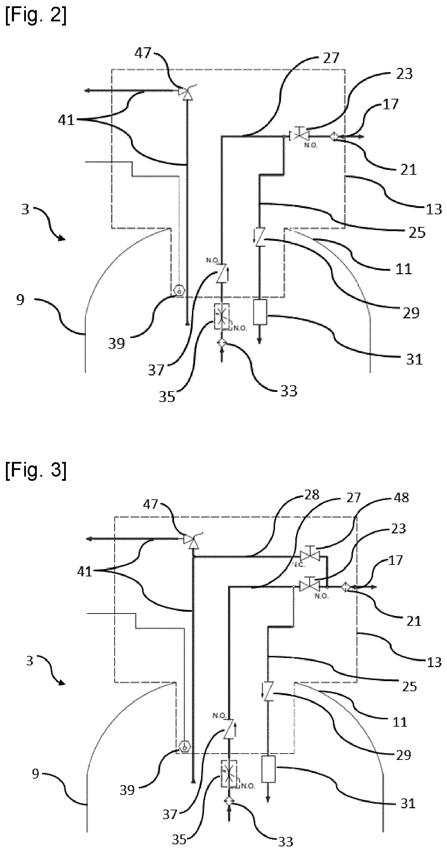

Dans une première variante illustrée sur la figure 2, le premier embout 13 comprend un conduit de passage 17 de fluide configuré pour la distribution de fluide hors du réservoir 3 et/ou pour le remplissage du réservoir 3. Le conduit de passage 17 est ainsi raccordé fluidiquement au conduit collecteur d'exploitation 5.

Le conduit collecteur d'exploitation 5 comporte une pluralité d'orifices, chaque orifice étant configuré pour être en communication fluidique avec un réservoir 3 via son conduit de passage de fluide 17. Le conduit collecteur d'exploitation 5 comporte en outre une ouverture 19 d'alimentation et/ou de distribution de fluide, laquelle est disposée à une extrémité du conduit collecteur d'exploitation 5.

Le conduit collecteur d'exploitation porte en outre l'électrovanne 7, laquelle est disposée à une extrémité du conduit collecteur d'exploitation 5 et bloque ou libère sélectivement le passage du fluide à travers l'ouverture 19.

Le premier embout 13 comprend en outre des éléments fonctionnels disposés directement dans le premier embout 13.

Ainsi, le conduit de passage 17 comporte un filtre 21 et une vanne d'arrêt manuelle 23, laquelle est normalement ouverte, comme indiqué sur les figures 2 et 3 à l'état « N.O. ». Le conduit de passage 17 comprend en outre une première branche 25 configurée pour le remplissage du réservoir 3 en fluide, et une deuxième branche 27 configurée pour la distribution de fluide hors du réservoir 3.

La première branche 25 comprend une soupape anti-retour 29 et un injecteur 31. La soupape anti-retour 29 permet le passage du fluide depuis la vanne d'arrêt manuelle 23 en direction du réservoir, et bloque le passage du fluide dans l'autre sens. Ainsi, la première branche 25 permet le remplissage du réservoir 3.

La deuxième branche 27 comprend un filtre 33, une soupape formant limiteur de débit 35 et une soupape anti-retour 37. La soupape formant limiteur de débit 35 est uniquement mécanique et constitue un moyen de fermeture automatique du conduit de passage 17. La soupape anti-retour 37 permet le passage du fluide depuis le réservoir vers la vanne d'arrêt manuelle 23, et bloque le passage du fluide dans l'autre sens. Ainsi, la deuxième branche 27 permet la distribution du fluide hors du réservoir 3.

Le premier embout 13 comprend également un capteur 39. Le capteur 39 est par exemple un capteur de température et/ou un capteur de pression.

Le premier embout 13 comporte en outre un premier conduit d'évacuation 41 de fluide configuré pour l'évacuation de fluide vers l'atmosphère. Le premier conduit d'évacuation 41 est raccordé fluidiquement à un premier conduit collecteur d'évacuation 43 de l'ensemble de stockage et de distribution 1. Ainsi, le premier conduit collecteur d'évacuation 43 comporte une première ouverture d'évacuation 45 de fluide vers l'atmosphère et une pluralité d'orifices, chaque orifice étant configuré pour être en communication fluidique avec un premier embout 13 via son premier conduit d'évacuation 41 de fluide. Le premier conduit d'évacuation 41 est, en fonctionnement normal, fermé par une première soupape de sécurité 47 contre la surpression, de préférence à déclenchement thermique via un élément fusible 47f. En cas d'augmentation de la température par exemple due à un incendie, la pression augmente au sein du réservoir 3. Afin d'éviter une explosion du réservoir 3, la première soupape de sécurité 47 ouvre le premier conduit d'évacuation 41 et permet une libération du fluide contenu dans le réservoir 3. Cette libération est effectuée à un débit prédéterminé, par exemple via une réduction de la section du premier conduit d'évacuation 41 ou via un bouchon percé d'un trou disposé dans le premier conduit d'évacuation 41. Une soupape de sécurité contre la surpression, également connue sous le nom de dispositif de décompression thermo-commandé (en anglais « Thermal and Pressure Relief Device » ou TPRD), est conçu pour évacuer rapidement le contenu entier du réservoir. Un tel dispositif fonctionne en cas de température élevée résultant par exemple d'un incendie pour éviter l'affaiblissement du réservoir et une rupture qui pourrait avoir des conséquences catastrophiques sur le matériel et le personnel. Le débit d'évacuation de l'hydrogène gazeux associé à l'ouverture d'un dispositif TPRD est de 70 g/s ce qui permet de vider un réservoir de 200 litres d'hydrogène à 350 bar en une dizaine de minutes. En cas d'incendie, seul le réservoir dont la température dépasse un certain seuil est vidé par l'ouverture du dispositif TPRD associé. Les réservoirs voisins restent sous pression tant que leurs dispositifs TPRD ne sont pas ouverts.

Dans une seconde variante illustrée sur la figure 3, le premier embout 13 est similaire au premier embout 13 de la première variante illustrée sur la figure 2, mais comporte de manière additionnelle un conduit de dérivation sous la forme d'une troisième branche 28 du conduit de passage 17, laquelle est configurée pour permettre le vidage du fluide hors du réservoir 3. Ainsi, la troisième branche 28 relie le conduit de passage 17 d'un point situé entre le filtre 21 et la vanne d'arrêt manuelle 23 à un point du premier conduit d'évacuation 41 situé entre l'intérieur du réservoir 3 et la première soupape de sécurité 47. La troisième branche 28 comprend une vanne d'arrêt manuelle 48, laquelle est normalement fermée, comme indiqué sur la figure 3 à l'état « N.C. ». Ainsi, en cas de besoin, par exemple après un démontage du réservoir 3, la vanne d'arrêt manuelle 48 peut être ouverte afin de permettre un vidage du réservoir 3.

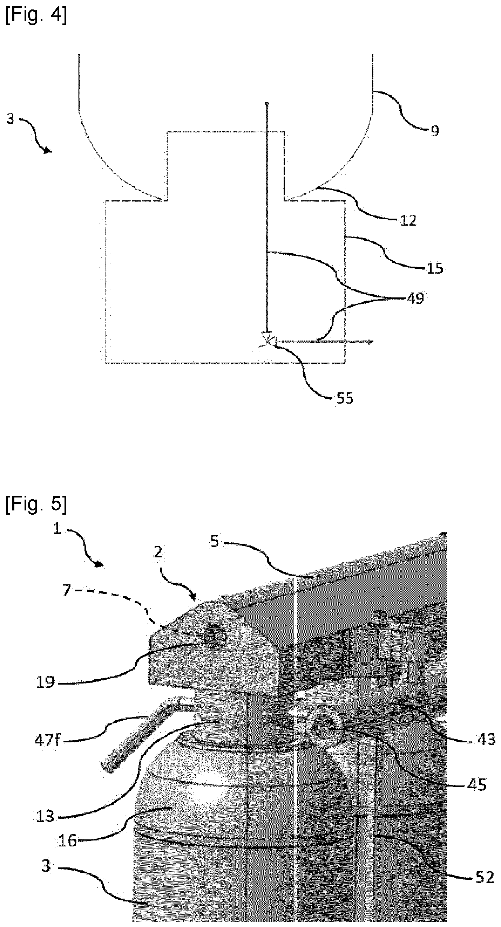

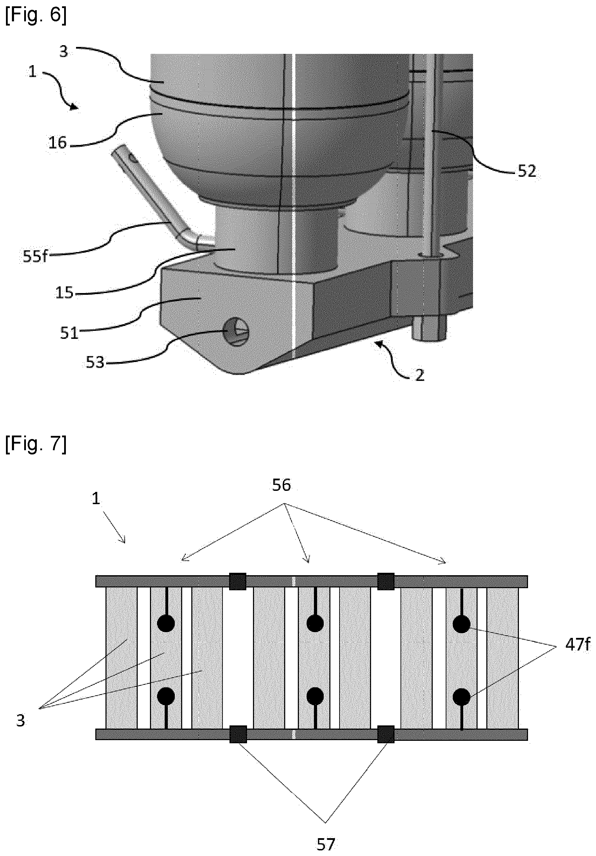

Comme illustré sur la figure 4, le second embout 15 comporte un second conduit d'évacuation 49 de fluide configuré pour l'évacuation de fluide vers l'atmosphère. Le second conduit d'évacuation 49 est ainsi raccordé fluidiquement à un second conduit collecteur d'évacuation 51 de l'ensemble de stockage et de distribution 1. Dans l'exemple illustré, notamment visible sur la figure 6, le second conduit collecteur d'évacuation 51 est agencé dans une partie de la structure porteuse 2. Le second conduit collecteur d'évacuation 51 comporte une seconde ouverture d'évacuation 53 de fluide vers l'atmosphère et une pluralité d'orifices, chaque orifice étant configuré pour être en communication fluidique avec un second embout 15 via son second conduit d'évacuation 49 de fluide. Le second conduit d'évacuation 49 est, en fonctionnement normal, fermé par une seconde soupape de sécurité 55 contre la surpression, de préférence à déclenchement thermique via un élément fusible 55f. En cas d'augmentation de la température par exemple due à un incendie, la pression augmente au sein du réservoir 3. Afin d'éviter une explosion du réservoir 3, la seconde soupape de sécurité 55 ouvre le second conduit d'évacuation 49 et permet une libération du fluide contenu dans le réservoir 3. Cette libération est effectuée à un débit prédéterminé, par exemple via une réduction de la section du second conduit d'évacuation 49 ou via un bouchon percé d'un trou disposé dans le second conduit d'évacuation 49.

Dans l'exemple illustré sur la figure 1, les réservoirs 3 sont supportés uniquement par le conduit collecteur d'exploitation 5 et par le second conduit collecteur d'évacuation 51. Le conduit collecteur d'exploitation 5 et le second conduit collecteur d'évacuation 51 sont disposés parallèlement et sont reliés par des tirants 52 sous forme de tiges métalliques, afin de rigidifier l'ensemble de stockage et de distribution 1.

Les réservoirs 3 sont par exemple vissés, encliquetés ou fixés par serrage, par leur premier embout 13 au conduit collecteur d'exploitation 5 et par leur second embout 15 au second conduit collecteur d'évacuation 51. De préférence les filetages du premier embout 13 et du second embout 15 sont inversés de telle sorte que, par rotation d'un réservoir 3 autour de son axe longitudinal, celui-ci se visse à la fois dans le conduit collecteur d'exploitation 5 et dans le second conduit collecteur d'évacuation 51. Le conduit collecteur d'exploitation 5, le premier conduit collecteur d'évacuation 43 et le second conduit collecteur d'évacuation 51 sont par exemple réalisés en métal, de préférence en aluminium.

On a représenté sur les figures 5 et 6 des détails d'un ensemble de stockage et de distribution illustré sur la figure 1.

On a représenté sur la figure 7, un ensemble de stockage et de distribution 1 constitué par l'assemblage de plusieurs sous-ensembles 56 de stockage et de distribution, chaque sous-ensemble 56 comprenant une fraction de la pluralité de réservoirs 3. Par exemple, dans le cas d'un ensemble de stockage et de distribution comprenant neuf réservoirs 3, ceux-ci peuvent être répartis en trois sous-ensembles 56 comprenant chacun trois réservoirs 3. Dans un autre exemple (non représenté), l'ensemble de stockage et de distribution comprend douze réservoirs 3, ceux-ci sont répartis en trois sous-ensembles 56 comprenant chacun quatre réservoirs 3. Cette disposition permet de rendre l'ensemble de stockage et de distribution modulable, c'est-à-dire capable de s'adapter à des besoins différents de stockage, d'un véhicule automobile à un autre.

Les sous-ensembles 56 sont mécaniquement reliés entre eux par des attaches mécaniques 57.

Avantageusement, on dispose une première soupape de sécurité 47 par sous-ensemble 56, la première soupape de sécurité 47 étant agencée dans le premier conduit collecteur d'évacuation 43 du sous-ensemble 56. Ainsi, le nombre de premières soupapes de sécurité 47 est minimisé, ce qui permet de réduire le coût et la masse de l'ensemble de stockage et de distribution 1.

Avantageusement, on dispose un ou deux éléments fusibles 47f par sous-ensemble 56 plutôt que par réservoir 3, ceci permet de minimiser le nombre d'éléments fusibles et ainsi de réduire le coût et la masse de l'ensemble de stockage et de distribution 1.

Un ensemble de stockage et de distribution 1 tel que susmentionné est par exemple disposé sur un véhicule (non représenté), de préférence un véhicule automobile, lequel comporte ainsi l'ensemble de stockage et de distribution 1, et
- un moyen de conversion d'énergie configuré pour alimenter en énergie des moyens de propulsion du véhicule, lequel est fluidiquement relié à l'ouverture du conduit collecteur d'exploitation 5 de telle sorte qu'il peut être alimenté en fluide,
- un moyen de remplissage de fluide, lequel est fluidiquement relié à l'ouverture du conduit collecteur d'exploitation 5, et
- un moyen de commande de l'électrovanne 7, lequel pilote l'électrovanne 7 de telle sorte que celle-ci ferme par défaut l'ouverture du conduit collecteur d'exploitation 5, et ouvre le conduit collecteur d'exploitation 5 lors d'une phase de remplissage et/ou lors d'une phase de fonctionnement du véhicule automobile.

Dans un mode de réalisation particulier du véhicule (non représenté), l'ensemble de stockage et de distribution 1 est logé dans un logement du véhicule configuré pour loger de manière sélectivement amovible l'un entre l'ensemble de stockage et de distribution 1 et un bloc-batterie. Ceci permet au véhicule de stocker aussi bien de l'hydrogène gazeux que des batteries, sans nécessiter de modifier le véhicule. Grâce à cette disposition, le même véhicule peut être propulsé, au choix, par de l'hydrogène gazeux ou des batteries.

Par bloc-batterie, il faut comprendre un ensemble composé de plusieurs modules de batteries qui sont eux-mêmes composés de plusieurs cellules, ainsi que de composantes de sécurité, d'interconnexions électriques, de gestion thermique et de systèmes de gestion de la batterie (en anglais « Battery Management System » ou BMS), l'ensemble étant contenu dans un boîtier rigide.

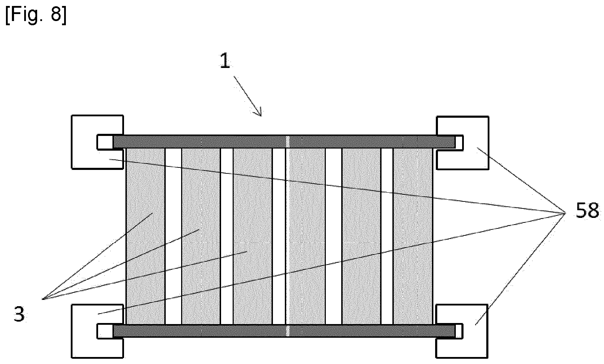

On a représenté sur la figure 8, un ensemble de stockage et de distribution 1 doté d'une protection antichoc. En effet, en cas de choc, par exemple lors d'un accident du véhicule équipé de l'ensemble de stockage et de distribution 1, du fait de la masse importante de l'ensemble de stockage et de distribution 1, les liaisons mécaniques internes au conduit collecteur d'exploitation 5, au second conduit collecteur d'évacuation 51 et aux éléments fonctionnels des premiers 13 et seconds 15 embouts risquent de se déformer ou de rompre. Pour éviter cela, il est prévu de protéger le conduit collecteur d'exploitation 5 et le second conduit collecteur d'évacuation 51 avec des moyens réduisant et absorbant l'impact du choc, par exemple, une protection antichoc 58. La protection antichoc 58 est, par exemple, quatre blocs de caoutchouc disposés aux quatre coins de l'ensemble de stockage et de distribution 1 ; un bloc à chaque extrémité d'un conduit collecteur 5, 51.

L'invention n'est pas limitée aux modes de réalisation présentés et d'autres modes de réalisation apparaîtront clairement à l'homme du métier. Il est notamment possible de réaliser le premier conduit d'évacuation 41 sous forme de trou traversant le premier embout 13, de manière à permettre un nettoyage aisé de l'intérieur du réservoir en fin de fabrication, puis de disposer, dans le premier conduit d'évacuation 41, un bouchon percé d'un trou de passage pour le fluide et la première soupape de sécurité 47. Il est notamment possible de réaliser le second conduit d'évacuation 49 sous forme de trou traversant le second embout 15, de manière à permettre un nettoyage aisé de l'intérieur de chaque réservoir en fin de fabrication et de réaliser rapidement et facilement un test de résistance de chaque réservoir à la pression par remplissage du réservoir en fluide à une pression de test supérieure à la pression stockage admissible pour le réservoir, de préférence la pression de test étant égale à 1,5 fois la pression de stockage admissible, puis de disposer, dans le second conduit d'évacuation 49, un bouchon percé d'un trou de passage pour le fluide et la seconde soupape de sécurité 55. L'invention n'est pas limitée à l'hydrogène gazeux. En effet, l'invention s'applique aussi à d'autres gaz stockés sous pression comme, par exemple, du gaz naturel.

### Liste de références

1 : ensemble de stockage et de distribution
2 : structure porteuse
3 : réservoir
5 : conduit collecteur d'exploitation
7 : électrovanne
9 : liner
11, 12 : col
13 : premier embout
15 : second embout
16 : structure de renforcement
17 : conduit de passage
19 : ouverture
21 : filtre
23 : vanne d'arrêt manuelle
25 : première branche
27 : deuxième branche
28 : troisième branche
29 : soupape anti-retour
31 : injecteur
33 : filtre
35 : soupape format limiteur de débit
37 : soupape anti-retour
39 : capteur
41 : premier conduit d'évacuation
43 : premier conduit collecteur d'évacuation
45 : première ouverture d'évacuation
47 : première soupape de sécurité
47f : élément fusible
48 : vanne d'arrêt manuelle
49 : second conduit d'évacuation
51 : second conduit collecteur d'évacuation
52 : tirant
53 : seconde ouverture d'évacuation
55 : seconde soupape de sécurité
55f : élément fusible
56 : sous-ensemble de stockage et de distribution
57 : attache mécanique
58 : protection antichoc

## Revendications

1. Ensemble de stockage et de distribution (1) de fluide sous pression pour véhicule, comprenant :
- une pluralité de réservoirs (3) de fluide sous pression, chaque réservoir (3) comprenant un premier embout (13) doté d'au moins un conduit de passage (17) de fluide configuré pour la distribution de fluide hors du réservoir (3) et pour le remplissage du réservoir (3),
- un conduit collecteur d'exploitation (5), lequel comporte une ouverture (19) d'alimentation et/ou de distribution de fluide et une pluralité d'orifices, chaque orifice étant configuré pour être en communication fluidique avec un réservoir (3) via son conduit de passage de fluide (17), et
- une électrovanne (7), laquelle est disposée à une extrémité du conduit collecteur d'exploitation (5) et bloque ou libère sélectivement le passage du fluide à travers l'ouverture (19),
**caractérisé en ce que** dans l'ensemble de stockage et de distribution chaque réservoir comprend un second embout (15) doté d'un second conduit d'évacuation (49) de fluide configuré pour l'évacuation de fluide vers l'atmosphère, et **en ce que** l'ensemble de stockage et de distribution (1) comprend :
- un second conduit collecteur d'évacuation (51), lequel comporte une seconde ouverture d'évacuation (53) de fluide vers l'atmosphère et une seconde pluralité d'orifices, chaque orifice étant configuré pour être en communication fluidique avec un second embout (15) via son second conduit d'évacuation (49) de fluide, **et en ce que** le second conduit d'évacuation (49) est, en fonctionnement normal, fermé par une seconde soupape de sécurité (55) contre la surpression.

2. Ensemble de stockage et de distribution (1) selon la revendication précédente, dans lequel le premier embout (13) de chaque réservoir (3) comprend en outre au moins un élément fonctionnel, lequel est disposé directement dans le premier embout (13).

3. Ensemble de stockage et de distribution selon la revendication précédente, dans lequel le ou les éléments fonctionnels sont choisis parmi :
- une soupape de sécurité (47) contre la surpression, de préférence à déclenchement thermique ;
- une soupape formant limiteur de débit (35) ;
- une soupape anti-retour (29, 37) ;
- une vanne d'arrêt manuelle (23, 48) ;
- un injecteur (31) ;
- un filtre (21, 33) ;
- un capteur (39) de température ;
- un capteur (39) de pression.

4. Ensemble de stockage et de distribution (1) selon l'une quelconque des revendications précédentes, dans lequel le premier embout (13) de chaque réservoir (3) comprend des moyens de fermeture (23, 35, 48) du conduit de passage (17), lesquels sont uniquement mécaniques et sont disposés directement dans le premier embout (13).

5. Ensemble de stockage et de distribution (1) selon l'une quelconque des revendications précédentes, dans lequel les réservoirs (3) s'étendent longitudinalement et sont disposés parallèlement les uns aux autres de telle sorte que le conduit collecteur d'exploitation (5) s'étend sensiblement dans un plan.

6. Ensemble de stockage et de distribution (1) selon la revendication précédente, dans lequel les réservoirs (3) sont en outre alignés de telle sorte que le conduit collecteur d'exploitation (5) est sensiblement rectiligne.

7. Ensemble de stockage et de distribution (1) selon l'une quelconque des revendications précédentes, dans lequel le premier embout (13) de chaque réservoir est doté d'un premier conduit d'évacuation (41) de fluide configuré pour l'évacuation de fluide vers l'atmosphère, l'ensemble de stockage et de distribution (1) comprenant en outre :
- un premier conduit collecteur d'évacuation (43), lequel comporte une première ouverture d'évacuation (45) de fluide vers l'atmosphère et une première pluralité d'orifices, chaque orifice étant configuré pour être en communication fluidique avec un premier embout (13) via son premier conduit d'évacuation (41) de fluide.

8. Ensemble de stockage et de distribution (1) selon l'une quelconque des revendications précédentes, dans lequel les réservoirs (3) sont attachés à une structure porteuse (2) dont la fonction principale est de solidariser les réservoirs (3) entre eux, et dans lequel le conduit collecteur d'exploitation (5) est agencé dans une partie de la structure porteuse (2).

9. Ensemble de stockage et de distribution (1) selon l'une quelconque des revendications précédentes, dans lequel les réservoirs (3) sont supportés uniquement par le conduit collecteur d'exploitation (5) et par le second conduit collecteur d'évacuation (51).

10. Ensemble de stockage et de distribution (1) selon l'une quelconque des revendications précédentes, dans lequel le fluide est uniquement à l'état gazeux dans les réservoirs (3) de fluide sous pression, et est de préférence de l'hydrogène.

11. Ensemble de stockage et de distribution (1) selon l'une quelconque des revendications précédentes, dans lequel l'ensemble de stockage et de distribution (1) est constitué par l'assemblage de plusieurs sous-ensembles (56) de stockage et de distribution.

12. Ensemble de stockage et de distribution (1) selon l'une quelconque des revendications précédentes, dans lequel l'ensemble de stockage et de distribution (1) est doté d'une protection antichoc (58).

13. Véhicule, de préférence véhicule automobile, comprenant :
- un ensemble de stockage et de distribution (1) selon l'une quelconque des revendications précédentes,
- un moyen de conversion d'énergie configuré pour alimenter en énergie des moyens de propulsion du véhicule, lequel est fluidiquement relié à l'ouverture (19) du conduit collecteur d'exploitation (5) de telle sorte qu'il peut être alimenté en fluide,
- un moyen de remplissage de fluide, lequel est fluidiquement relié à l'ouverture (19) du conduit collecteur d'exploitation (5), et
- un moyen de commande de l'électrovanne (7), lequel pilote l'électrovanne (7) de telle sorte que celle-ci ferme par défaut l'ouverture du conduit collecteur d'exploitation (5), et ouvre le conduit collecteur d'exploitation (5) lors d'une phase de remplissage et/ou lors d'une phase de démarrage du véhicule.

14. Véhicule selon la revendication précédente, dans lequel l'ensemble de stockage et de distribution (1) est logé dans un logement du véhicule configuré pour loger de manière sélectivement amovible l'un entre l'ensemble de stockage et de distribution (1) et un bloc-batterie.

## Patentansprüche

1. Anordnung (1) zur Speicherung und Abgabe von Druckfluid für ein Fahrzeug, aufweisend:
- eine Vielzahl von Behältern (3) für unter Druck stehendes Fluid, wobei jeder Behälter (3) ein erstes Endstück (13) mit mindestens einer Fluiddurchgangsleitung (17) aufweist, die für die Abgabe von Fluid aus dem Behälter (3) und für das Befüllen des Behälters (3) konfiguriert ist,
- eine Betriebssammelleitung (5), die eine Öffnung (19) zum Zuführen und/oder Abgeben von Fluid und eine Vielzahl von Öffnungen aufweist, wobei jede Öffnung so konfiguriert ist, dass sie über ihre Fluiddurchgangsleitung (17) in Fluidverbindung mit einem Behälter (3) steht, und
- ein Magnetventil (7), das an einem Ende der Betriebssammelleitung (5) angeordnet ist und den Durchgang des Fluids durch die Öffnung (19) selektiv sperrt oder freigibt,
**dadurch gekennzeichnet, dass** in der Speicher- und Abgabeanordnung jeder Behälter ein zweites Endstück (15) mit einer zweiten Fluidauslassleitung (49) aufweist, die für die Abgabe von Fluid an die Atmosphäre konfiguriert ist, und dass die Speicher- und Abgabeanordnung (1) aufweist:
- eine zweite Auslass-Sammelleitung (51), die eine zweite Öffnung (53) zum Auslassen von Fluid an die Atmosphäre und eine zweite Vielzahl von Öffnungen aufweist, wobei jede Öffnung so konfiguriert ist, dass sie über ihre zweite Fluidauslassleitung (49) in Fluidverbindung mit einem zweiten Endstück (15) steht, und dass die zweite Auslassleitung (49) im Normalbetrieb durch ein zweites Sicherheitsventil (55) gegen Überdruck verschlossen ist.

2. Speicher- und Abgabeanordnung (1) nach dem vorhergehenden Anspruch, wobei das erste Endstück (13) jedes Behälters (3) zusätzlich mindestens ein Funktionselement aufweist, das direkt im ersten Endstück (13) angeordnet ist.

3. Speicher- und Abgabeanordnung nach dem vorhergehenden Anspruch, wobei das oder die Funktionselemente ausgewählt sind aus:
- einem Sicherheitsventil (47) gegen Überdruck, vorzugsweise mit thermischer Auslösung;
- ein Durchflussbegrenzungsventil (35);
- ein Rückschlagventil (29, 37);
- ein manuelles Absperrventil (23, 48);
- einen Injektor (31);
- einen Filter (21, 33);
- einen Temperatursensor (39);
- einen Drucksensor (39).

4. Speicher- und Abgabeanordnung (1) nach einem der vorhergehenden Ansprüche, wobei das erste Endstück (13) jedes Behälters (3) Mittel zum Sperren (23, 35, 48) der Durchgangsleitung (17) aufweist, die nur mechanisch sind und direkt im ersten Endstück (13) angeordnet sind.

5. Speicher- und Abgabeanordnung (1) nach einem der vorhergehenden Ansprüche, wobei sich die Behälter (3) in Längsrichtung erstrecken und parallel zueinander angeordnet sind, so dass sich die Betriebssammelleitung (5) im Wesentlichen in einer Ebene erstreckt.

6. Speicher- und Abgabeanordnung (1) nach dem vorhergehenden Anspruch, wobei die Behälter (3) außerdem so ausgerichtet sind, dass die Betriebssammelleitung (5) im Wesentlichen geradlinig verläuft.

7. Speicher- und Abgabeanordnung (1) nach einem der vorhergehenden Ansprüche, wobei der das Endstück (13) jedes Behälters mit einer ersten Fluidauslassleitung (41) versehen ist, die für die Abgabe von Fluid an die Atmosphäre konfiguriert ist, wobei die Speicher- und Abgabeanordnung (1) ferner aufweist:
- eine erste Auslass-Sammelleitung (43), die eine erste Öffnung (45) zum Auslass von Fluid in die Atmosphäre und eine erste Vielzahl von Öffnungen aufweist, wobei jede Öffnung so konfiguriert ist, dass sie über ihre erste Fluidauslassleitung (41) in Fluidverbindung mit einem ersten Endstück (13) steht.

8. Speicher- und Abgabeanordnung (1) nach einem der vorhergehenden Ansprüche, wobei die Behälter (3) an einer Tragstruktur (2) befestigt sind, deren Hauptfunktion darin besteht, die Behälter (3) miteinander zu verbinden, und wobei die Betriebssammelleitung (5) in einem Teil der Tragstruktur (2) angeordnet ist.

9. Speicher- und Abgabeanordnung (1) nach einem der vorhergehenden Ansprüche, wobei die Behälter (3) nur von der Betriebssammelleitung (5) und der zweiten Auslass-Sammelleitung (51) getragen werden.

10. Speicher- und Abgabeanordnung (1) nach einem der vorhergehenden Ansprüche, wobei das Fluid in den Druckfluidbehältern (3) nur in gasförmigem Zustand vorliegt und vorzugsweise Wasserstoff ist.

11. Speicher- und Abgabeanordnung (1) nach einem der vorhergehenden Ansprüche, wobei die Speicher- und Abgabeanordnung (1) durch Zusammenbau mehrerer Speicher- und Abgabeunteranordnungen (56) gebildet ist.

12. Speicher- und Abgabeanordnung (1) nach einem der vorhergehenden Ansprüche, wobei die Speicher- und Abgabeanordnung (1) mit einem Stoßschutz (58) versehen ist.

13. Fahrzeug, vorzugsweise Kraftfahrzeug, mit:
- einer Speicher- und Abgabeanordnung (1) nach einem der vorhergehenden Ansprüche,
- ein Energieumwandlungsmittel, das konfiguriert ist, Antriebsmittel des Fahrzeugs mit Energie zu versorgen, wobei das Energieumwandlungsmittel fluidisch mit der Öffnung (19) der Betriebssammelleitung (5) verbunden ist, so dass es mit Fluid versorgt werden kann,
- ein Mittel zum Nachfüllen von Fluid, das mit der Öffnung (19) der Betriebssammelleitung (5) fluidisch verbunden ist, und
- ein Mittel zur Steuerung des Magnetventils (7), welches das Magnetventil (7) so ansteuert, dass dieses standardmäßig die Öffnung der Betriebssammelleitung (5) schließt und die Betriebssammelleitung (5) während einer Füllphase und/oder während einer Startphase des Fahrzeugs öffnet.

14. Fahrzeug nach dem vorhergehenden Anspruch, wobei die Speicher- und Abgabeanordnung (1) in einem Gehäuse des Fahrzeugs untergebracht ist, das so konfiguriert ist, dass es selektiv entfernbar entweder die Speicher- und Abgabeanordnung (1) oder ein Batteriepack aufnimmt.

## Claims

1. Pressurized fluid storage and dispensing assembly (1) for a vehicle, **characterized in that** it comprises:
- a plurality of pressurized fluid reservoirs (3), each reservoir (3) comprising a first end piece (13) provided with at least one fluid passage duct (17) configured for dispensing fluid from the reservoir (3) and for filling the reservoir (3),
- a use collector duct (5), which comprises an opening (19) for supplying and/or dispensing fluid and a plurality of orifices, each orifice being configured to be fluidically connected to a reservoir (3) via its fluid passage duct (17), and
- an electrically operated valve (7), which is arranged at one end of the use collector duct (5) and selectively closes or opens the fluid passage through the opening (19),
**characterized in that** in the storage and dispensing assembly each reservoir comprises a second end piece (15) provided with a second fluid discharge duct (49) configured to discharge fluid to the atmosphere, and **in that** the storage and dispensing assembly (1) comprises:
- a second discharge collector duct (51), which comprises a second opening (53) for discharging fluid to the atmosphere and a second plurality of orifices, each orifice being configured to be in fluid communication with a second end piece (15) via its second fluid discharge duct (49), and **in that** the second discharge duct (49) is, in normal operation, closed by a second pressure relief valve (55).

2. Storage and dispensing assembly (1) according to the preceding claim, wherein the first end piece (13) of each reservoir (3) further comprises at least one functional element, which is arranged directly in the first end piece (13).

3. Storage and dispensing assembly according to the preceding claim, wherein the functional element(s) are chosen from:
- a pressure relief valve (47), preferably with thermal release;
- a flow limiter valve (35);
- a non-return valve (29, 37);
- a manual shut-off valve (23, 48);
- an injector (31);
- a filter (21, 33);
- a temperature sensor (39);
- a pressure sensor (39).

4. Storage and dispensing assembly (1) according to one of the preceding claims, wherein the first end piece (13) of each reservoir (3) comprises means (23, 35, 48) for closing the passage duct (17), which are solely mechanical and are arranged directly in the first end piece (13).

5. Storage and dispensing assembly (1) according to one of the preceding claims, wherein the reservoirs (3) extend longitudinally and are arranged parallel to each other such that the use collector duct (5) extends substantially in one plane.

6. Storage and dispensing assembly (1) according to the preceding claim, wherein the reservoirs (3) are further aligned so that the use collector duct (5) is substantially straight.

7. Storage and dispensing assembly (1) according to one of the preceding claims, wherein the first end piece (13) of each reservoir is provided with a first fluid discharge duct (41) configured to discharge fluid to the atmosphere, the storage and dispensing assembly (1) further comprising:
- a first discharge collector duct (43), which comprises a first opening (45) for discharging fluid to the atmosphere and a first plurality of orifices, each orifice being configured to be in fluid communication with a first end piece (13) via its first fluid discharge duct (41).

8. Storage and dispensing assembly (1) according to one of the preceding claims, wherein the reservoirs (3) are attached to a support structure (2) whose main function is to secure the reservoirs (3) together, and wherein the use collector duct (5) is arranged in part of the support structure (2).

9. Storage and dispensing assembly (1) according to one of the preceding claims, wherein the reservoirs (3) are supported only by the use collector duct (5) and by the second discharge collector duct (51).

10. Storage and dispensing assembly (1) according to one of the preceding claims, wherein the fluid is only in the gaseous state in the pressurized fluid reservoirs (3), and is preferably hydrogen.

11. Storage and dispensing assembly (1) according to one of the preceding claims, wherein the storage and dispensing assembly (1) is formed by assembling several storage and dispensing subassemblies (56).

12. Storage and dispensing assembly (1) according to one of the preceding claims, wherein the storage and dispensing assembly (1) is fitted with an impact protection (58).

13. Vehicle, preferably motor vehicle, comprising:
- a storage and dispensing assembly (1) according to one of the preceding claims,
- an energy conversion means configured to supply energy to the propulsion means of the vehicle, which is fluidically connected to the opening (19) of the use collector duct (5) so that it can be supplied with fluid,
- a fluid filling means, which is fluidically connected to the opening (19) of the use collector duct (5), and
- a means for controlling the electrically operated valve (7), which drives the electrically operated valve (7) so that it closes the opening of the use collector duct (5) by default, and opens the use collector duct (5) during a filling phase and/or during a vehicle startup phase.

14. Vehicle according to the preceding claim, wherein the storage and dispensing assembly (1) is housed in a housing of the vehicle configured to selectively removably house one between the storage and dispensing assembly (1) and a battery pack.
